(19) Europäisches Patentamt
European Patent Office
Office européen des brevets

(11) EP 2 553 016 B1

(12) EUROPEAN PATENT SPECIFICATION

(45) Date of publication and mention of the grant of the patent:
**29.05.2019 Bulletin 2019/22**

(21) Application number: **11704234.1**

(22) Date of filing: **18.02.2011**

(51) Int Cl.:
***C08L 23/10*** *(2006.01)* ***C08F 297/08*** *(2006.01)*

(86) International application number:
**PCT/EP2011/052397**

(87) International publication number:
**WO 2011/117032 (29.09.2011 Gazette 2011/39)**

# (54) HETEROPHASIC POLYOLEFIN COMPOSITION

HETEROPHASISCHE POLYOLEFIN-ZUSAMMENSETZUNG

COMPOSITION DE POLYOLÉFINE HÉTÉROPHASIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2010 US 341578 P**
**26.03.2010 EP 10157987**

(43) Date of publication of application:
**06.02.2013 Bulletin 2013/06**

(73) Proprietor: **Basell Poliolefine Italia S.r.l.**
**20121 Milano (IT)**

(72) Inventors:
- **MECKLENBURG, Thomas**
**35510 Butzbach (DE)**
- **MASSARI, Paola**
**I-44121 Ferrara (IT)**
- **CIARAFONI, Marco**
**I-44123 Ferrara (IT)**

(74) Representative: **Colucci, Giuseppe et al**
**Basell Poliolefine Italia S.r.l.**
**Intellectual Property**
**Piazzale G. Donegani 12**
**44122 Ferrara (IT)**

(56) References cited:
**WO-A1-2005/121240 WO-A1-2008/061843**
**WO-A1-2009/106411**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 553 016 B1

## Description

The present invention relates to heterophasic polyolefin compositions that find application in the production of moulded articles parts, particularly articles obtained by injection moulding, for applications requiring dimensional stability of the mould and high surface quality such as it is required in the field of appliances casing with high esthetical requirements, (e.g. visible parts of white goods, lawn and garden products,) but also for tool boxes, battery casing, toys, luggage where amorphic styrenic polymers are typically used materials. The balance of properties required for replacement of such materials with polyolefin materials is a demanding objective requiring efforts for selecting suitable polymeric structures and components.

In the International application WO2005/014715, polyolefin compositions having flexural modulus values of higher than 1000 MPa, in particular higher than 1100 MPa, still maintaining a good balance of overall mechanical properties and low values of thermal shrinkage are described, comprising (percentage by weight):

(A) from 60 to 85% by weight of a broad molecular weight distribution propylene polymer having a polydispersity index from 5 to 15 and melt flow rate of from 20 to 78 g/10 min, and

(B) from 15 to 40% by weight of a partially xylene-soluble olefin polymer rubber containing at least 65% by weight of ethylene.

In WO2005121240 specific propylene polymers and ethylene/$\alpha$-olefin(s) copolymers, optionally in combination with further elastomeric components and a mineral filler characterized in particular by high flexural modulus values, with very low values of thermal shrinkage are disclosed.

The amount of mineral filler (e.g. talc) disclosed in WO2005121240 is up to 20% by weight of the composition (0.85 and 6% by weight in the examples).

The overall balance of properties is not yet completely satisfying, particularly the mould shrinkage does not reach values comparable to other materials such as styrenic polymers (ABS) .

In the international patent application WO2008079998 talc filled TPO's are disclosed comprising a blend of isotactic propylene with and an elastomeric impact modifier (Engage). The impact modifier is a copolymer obtained by constrained geometry catalysis and the components are selected to obtain low gloss compositions with flexural modulus and HDT of polycarbonate/ABS materials.

It is still felt the need of polyolefin compositions having improved balance of properties particularly thermal shrinkage and surface quality (high gloss homogeneity and scratch resistance) comparable with ABS and PS materials.

Thus, the present invention relates to a polymer composition comprising:

A) a polymer blend, comprising:

A1) 65-75% by weight, of a propylene homopolymer or copolymer containing up to 5% by weight of ethylene and/or one or more $C_4$-$C_{10}$ $\alpha$-olefin(s), said homopolymer or copolymer having a value of MFR (230 °C, 2.16 kg) of from 25 to 40 g/10 min, and a content of fraction soluble in xylene at room temperature (around 25 °C) of 2% by weight or less; and

A2) 25-35% by weight, of one or more copolymer(s) of ethylene with one or more $C_4$-$C_{10}$ $\alpha$-olefin(s) containing from 15 to 35% by weight, preferably from 20 to 30% by weight of said $C_4$-$C_{10}$ $\alpha$-olefin(s);

said polymer blend (A) having values of MFR of from 15 to 25 g/10 min, a total content of ethylene of 20% by weight or more, a total content of $C_4$-$C_{10}$ $\alpha$-olefin(s) of equal to or more than 4.5 % by weight, preferably of from 5 to 15% by weight, a ratio of the total content of ethylene to the total content of $C_4$-$C_{10}$ $\alpha$-olefin(s) of 2.3 or more, preferably of 3 or more, and an intrinsic viscosity value of the fraction soluble in xylene at room temperature from 1.1 to 1.5 dl/g, the amounts of (A1) and (A2) being referred to the total weight of the polymer blend (A), **a DSC thermogram profile showing a melting temperature peak ($Tm_{A2}$) of from 80 to 140°C, distinguishable from a DSC melting temperature peak ($Tm_{A1}$) at higher temperatures equal to or higher than 140°C;**

B) a talc mineral filler.

wherein the amount of component (B) is **22**-40% by weight, preferably 22-30% by weight referred to the total weight of the composition.

Optionally and even more preferably the composition according to the present invention further comprises: C) an elastomeric polymer, different from A2), having a hardness (Shore A, ASTM D-2240) value equal to or lower than 80 points, preferably equal to or lower than 60 points, more preferably equal to or lower than 55 points; the amount of optional component (C), when present, is 1-15% by weight, preferably 2-10% by weight, referred to the total weight of the composition.

From the above definitions it is evident that, when the composition of the present invention comprises the component (A) and (B), the amount of (A) is from 80 to 60% by weight, preferably from 78 to 70% by weight. When it comprises component (A), component (B) and the optional component (C), the amount of (A) is from 79 to 45% by weight, preferably from 76 to 60% by weight with reference to the total weight of the composition.

It is also evident that the term "copolymer" includes polymers containing more than one kind of comonomers.

The polyolefin composition of the present invention containing a crystalline propylene polymer component and one or more copolymer(s) of ethylene with $C_4$-$C_{10}$ $\alpha$-olefins, show the required good balance of flexural modulus and IZOD impact strength, high surface quality (gloss and scratch resistance) and chemical resistance in contact with organic media (fatty and alcoholic). In addition to the said properties, the composition of the present invention presents a low degree of mould shrinkage. Said properties impart high dimensional stability and good esthetical appearance to the final articles obtained from the said composition.

The compositions of the present invention can be easily converted into various kinds of finished or semi-finished articles, in particular by using injection-moulding techniques, as they possess relatively high values of MFR, associated with the above said optimal balance of properties. In particular the compositions exhibit, low mould shrinkage of less than 0.65% (MD) and less than 0.9% (TD), and high gloss of more than 65% (for black samples) and of more than 70%, preferably of more than 80 % (for white samples), in addition to an optimal balance of tensile modulus higher than 1500 MPa (ISO 527-1.2); and scratch resistance. The above properties are measured as detailed in the analytical method section.

The filled compositions of the present invention have more preferably and advantageously one or more of the following properties:

- mould shrinkage preferably of less than 0.5% MD and less than 0.75%TD
- a tensile modulus preferably from 1600 to 2200 MPa, more preferably higher than 1800 MPa
  a value of Charpy unnotched impact strength at 23 °C (ISO 179/leU) preferably from equal to or higher than 40 $KJ/m^2$, preferably higher than 100 $KJ/m^2$.

The filled compositions of the present invention have preferably a melt volume-flow rate value (MVR - according to ISO 1133) of 15 g/10 min or higher, or even of 20 g/10 min. or higher, for example in the range from 15 to 60 g/10 min., in particular from 20 to 60 g/10 min.

Polymer blend component (A) is a crystalline polymer component (matrix) having typically a very high gloss and Flexural Modulus, preferably a flexural modulus (ISO 178) higher than 900, preferably higher than 950, even more preferably higher than 1000 MPa, and preferably gloss at 60° higher than 90%. The amount of crystalline propylene component (A1) which is soluble in xylene at room temperature is, as previously said, equal to or lower than 7% by weight, preferably equal to or lower than 5% by weight, more preferably of equal to or less than 2% by weight. Such values of xylene-soluble content correspond to isotactic index values equal to or higher than 93%, preferably equal to or higher than 95%.

Typically the copolymer(s) of ethylene component (A2) (rubber) is partially soluble in xylene at room temperature. The fraction of component (A2) which is soluble in xylene at room temperature is preferably of about 50-87% by weight, more preferably 50-70% by weight of component (A2).

Preferably, the polymer blend component (A) according to the present invention has a DSC thermogram profile showing a melting temperature peak ($Tm_{A2}$) of from 100 to 125°C, distinguishable from a DSC melting temperature peak ($Tm_{A1}$) at higher temperatures equal to or higher than 140°C, preferably equal to or higher than 150°C, more preferably higher than 160°C. Without being bound by any theory the $Tm_{A2}$ is attributed to the ethylene crystallinity (insoluble fraction) of component (A2), $Tm_{A1}$ is attributed to the propylene crystallinity of component (A1). The DSC thermogram is collected according to the method described in the analytical method section.

Illustrative $C_4$-$C_{10}$ $\alpha$-olefins for components (A1) and (A2) include 1-butene, 1-pentene, 1-hexene, 4-methyl-1-pentene and 1-octene, with 1-butene being particularly preferred.

The composition of the present invention can be prepared by mechanically mixing components (C) and (B), when present, with the polymer blend (A). Such polymer blend (A) can in turn be prepared by a sequential polymerization, comprising at least two sequential steps, wherein components (A1) and (A2) are prepared in separate subsequent steps, operating in each step in the presence of the polymer formed and the catalyst used in the preceding step. The catalyst is added only in the first step; however its activity is such that it is still active for all the subsequent steps. The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The polymer blend (A) can also be produced by a gas-phase polymerisation process carried out in at least two interconnected polymerisation zones. The said type of process is illustrated in European patent application 782 587.

The said polymerizations are preferably carried out in the presence of stereospecific Ziegler-Natta catalysts. An essential component of said catalysts is a solid catalyst component comprising a titanium compound having at least one titanium-halogen bond, and an electron-donor compound, both supported on a magnesium halide in active form. Another essential component (co-catalyst) is an organoaluminum compound, such as an aluminum alkyl compound.

An external donor is optionally added.

The catalysts generally used in the process of the invention are capable of producing polypropylene with an isotactic index equal to or greater than 93%, preferably equal to or greater than 95%. Catalysts having the above mentioned characteristics are well known in the patent literature; particularly advantageous are the catalysts described in US patent 4,399,054 and European patent 45977. Other examples can be found in US patent 4,472,524.

The solid catalyst components used in said catalysts comprise, as electron-donors (internal donors), compounds selected from the group consisting of ethers, ketones, lactones, compounds containing N, P and/or S atoms, and esters of mono- and dicarboxylic acids.

The internal donor is preferably selected from the esters of mono or dicarboxylic organic acids such as benzoates, malonates, phthalates and certain succinates. They are described in US patent 4522930, European patent 45977 and international patent applications WO 00/63261 and WO 01/57099, for example. Particularly suited are the phthalic acid esters and succinate acids esters. Alkylphthalates are preferred, such as diisobutyl, dioctyl and diphenyl phthalate and benzyl-butyl phthalate..

Representative examples of said dieters are 2-methyl-2-isopropyl-1,3-dimethoxypropane, 2,2-diisobutyl-1,3-dimethoxypropane, 2-isopropyl-2-cyclopentyl-1,3-dimethoxypropane, 2-isopropyl-2-isoamyl-1,3-dimethoxypropane, 9,9-bis (methoxymethyl) fluorene.

Other suitable electron donors are succinates, preferably selected from succinates of formula (I) below:

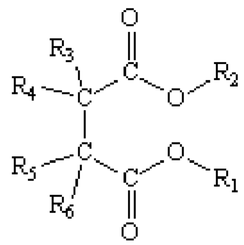

wherein the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to, or different from, each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle; with the proviso that when $R_3$ to $R_5$ are contemporaneously hydrogen, $R_6$ is a radical selected from primary branched, secondary or tertiary alkyl groups, cycloalkyl, aryl, arylalkyl or alkylaryl groups having from 3 to 20 carbon atoms;
or of formula (II) below:

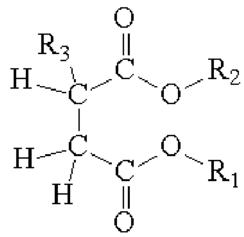

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms and the radical $R_3$ is a linear alkyl group having at least four carbon atoms optionally containing heteroatoms.

Other electron-donors suitable are 1,3-diethers. Suitable diethers are described in published European patent applications 361493 and 728769.

The preparation of the above mentioned catalyst components is carried out according to various methods.

For example, a $MgCl_2 \cdot ROH$ adduct (in particular in the form of spheroidal particles) wherein n is generally from

1 to 3 and ROH is ethanol, butanol or isobutanol, is reacted with an excess of $TiCl_4$ containing the electron-donor compound. The reaction temperature is generally from 80 to 120° C. The solid is then isolated and reacted once more with $TiCl_4$, in the presence or absence of the electron-donor compound, after which it is separated and washed with aliquots of a hydrocarbon until all chlorine ions have disappeared.

In the solid catalyst component the titanium compound, expressed as Ti, is generally present in an amount from 0.5 to 10% by weight. The quantity of electron-donor compound which remains fixed on the solid catalyst component generally is 5 to 20% by moles with respect to the magnesium dihalide.

The titanium compounds which can be used for the preparation of the solid catalyst component are the halides and the halogen alcoholates of titanium. Titanium tetrachloride is the preferred compound.

The reactions described above result in the formation of a magnesium halide in active form. Other reactions are known in the literature, which cause the formation of magnesium halide in active form starting from magnesium compounds other than halides, such as magnesium carboxylates.

The Al-alkyl compounds used as co-catalysts comprise the Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups.

The Al-alkyl compound is generally used in such a quantity that the Al/Ti ratio be from 1 to 1000.

The electron-donor compounds that can be used as external donors include aromatic acid esters such as alkyl benzoates, and in particular silicon compounds containing at least one Si-OR bond, where R is a hydrocarbon radical.

Examples of silicon compounds are (tert-butyl)$_2$Si(OCH$_3$)$_2$, (cyclohexyl)(methyl)Si (OCH3)$_2$, (phenyl)$_2$Si(OCH$_3$)$_2$ and (cyclopentyl)$_2$Si(OCH$_3$)$_2$. 1,3-diethers having the formulae described above can also be used advantageously. If the internal donor is one of these dieters, the external donors can be omitted.

The catalysts can be pre-contacted with small amounts of olefins (prepolymerization).

Component (C) when present is preferably selected from copolymers of ethylene with a $C_3$-$C_{10}$ $\alpha$-olefin containing at least 20 wt%, preferably from 20 to 70 wt%, of $C_3$-$C_{10}$ $\alpha$-olefin (13C-NMR analysis). Suitable and preferred copolymers component (C) commercially available are obtained with metallocene or constrained geometry catalysis and typically have molecular weight distribution (Mw/Mn measured via GPC) of from 1 to 3.

Preferred examples of elastomeric polymers component (C) are:

(a) elastomeric copolymers of ethylene with 1-octene having from 20 wt% to 45 wt% of 1-octene (13C-NMR analysis); preferably having density of less than 0.89 g/ml (measured according to ASTM D-792);

(b) elastomeric thermoplastic copolymers of ethylene with 1-butene having from 20 wt% to 40 wt% of 1-butene (13C-NMR analysis); preferably having density of less than 0.89 g/ml (measured according to ASTM D-792);

A specific example of copolymers (b) is an ethylene-butene-1 random copolymer rubber ENGAGE 7467 produced by The Dow Chemical Co. Ltd., having density of 0.862 g/cm$^3$ according to method ASTM D 792, MFR of 1.2 g/10 min (ASTM D 1238 190° C/2.16 Kg, standard technically equivalent to ISO 1133), hardness Shore A (ASTM D-2240) of 52.

The talc mineral filler component (B), preferred pure white, used in the composition of the present invention is typically a Magnesium-Silicate-Hydrate with lamellar structure (platy) in particle form having an average (d50) diameter ranging form 0.1 to 10 micrometers and a top cut ranging from 1 to 40 micrometer, more preferably the average (d50) diameter is equal to or lower than 5 micrometer (determination ISO 13317-3 by Sedigraph).

The composition of the present invention can also contain additives commonly employed in the art, such as antioxidants and process stabilisers, light stabilisers, release agents, antistatics, nucleating agents and colorants.

As previously said, the compositions of the present invention can be prepared by blending the components (A), (B) and optionally (C). Any mixing apparatus equipped with mixing elements and known in the art can be used, such as an internal mixer or extruder. For example one can use a Banbury mixer or single-screw Buss extruder or twin-screw Maris or Werner& Pfleiderer type extruder.

The present invention also provides final injection molded articles, such as appliances casing with high esthetical requirements, (e.g. visible parts of white goods, lawn and garden products,) but also for tool boxes, battery casing, toys, luggage made of the said polyolefin composition.

The practice and advantages of the present invention are disclosed below in the following examples. These Examples are illustrative only, and are not intended to limit the scope of the invention in any manner whatsoever.

The following analytical methods are used to characterize the polymer compositions.

Melt mass-Flow Rate (MFR) and Melt Volume-flow Rate (MVR): measured according to ISO 1133 at 230°C/2.16 Kg were not differently specified.

Ash content (1h/625°C): ISO 3451/1

[I.V.] intrinsic viscosity: determined in tetrahydronaphtalene at 135°C.

Ethylene and butene content: I.R. Spectroscopy.

Flexural Modulus: ISO 178.
Tensile properties: Tensile Modulus, Tensile stress and strain at yield and Tensile stress and strain at break determined according to ISO 527.
Charpy notched impact test: ISO 179/1eA at 23 °C and 0 °C
Charpy unnotched impact test: ISO 179/1eU at 23 °C and 0 °C
Izod Impact test: ISO 180 at 23 °C and 0 °C
Xylene soluble and insoluble fractions

2.5 g of polymer and 250 $cm^3$ of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25 °C for 30 minutes as well. The so formed solid is filtered on quick filtering paper. 100 $cm^3$ of the filtered liquid is poured in a previously weighed aluminum container which is heated on a heating plate under nitrogen flow, to remove the solvent by evaporation. The container is then kept in an oven at 80 °C under vacuum until constant weight is obtained. The weight percentage of polymer soluble in xylene at room temperature (25°C) is then calculated.

The percent by weight of polymer insoluble in xylene at room temperature is considered the isotacticity index of the polymer. This value corresponds substantially to the isotacticity index determined by extraction with boiling n-heptane, which by definition constitutes the isotacticity index of polypropylene.

Thermal properties (DSC):

The melting temperatures ($Tm_{A1}$) and ($Tm_{A2}$) are measured on the polymer composition (A). Differential scanning calorimetry (DSC) is used according to ISO 11357/3 with samples of 5-7 mg weight; heating and cooling rates 20°C/min, in a temperature operating range from 40°C to 200°C.

Longitudinal (MD) and transversal (TD) mould shrinkage: measured after 24h on DIN A5 / 4mm plaques and a film gate over the whole width to ensure homogeneous flow and orientation of the melt. A plaque of 210 x 145 x 4 mm is moulded in an injection moulding machine "SANDRETTO serie 7 190" (where 190 stands for 190 tons of clamping force).

The injection conditions are:

melt temperature = 210°C;
Injection moulding pressure:= 80 bar
mould temperature = 30°C;
injection time = 11 seconds;
holding pressure = 50 bar
holding time = 30 seconds;
Cooling time = 20 sec
Cycle time = 76 s
screw speed = 80 rpm (1/min).

The plaque is measured 24 hours after moulding (mould shrinkage) and after annealing 48h at 80°C (Total shrinkage), through callipers, and the shrinkage is given by:

$$\text{Longitudinal shrinkage (MD)} = \frac{210 - read_value}{210} \text{ x } 100$$

$$\text{Transversal shrinkage (TD)} = \frac{145 - read_value}{145} \text{ x } 100$$

wherein 210 is the length (in mm) of the plaque along the flow direction (MD), measured immediately after moulding; 145 is the length (in mm) of the plaque crosswise the flow direction (TD), measured immediately after moulding; the *read_value* is the plaque length in the relevant direction. Data are reported in table 3.

Gloss on plaque: specular gloss (also called Gardner gloss) determined according to ISO 2813 with 60° Geometry on high gloss plaques 1mm thickness.

10 rectangular specimens (55x60x1 mm) for each polymer to be tested are injection molded using a Krauss Maffei injection moulding machine model KM 150-700C2 operated under the following conditions:

| | |
|---|---|
| Melt temperature: | 200°C |
| Melt temperature profile: | Zone1 180°C, Zone2 185°C, Zone3 190°C, Zone4 190°C, injector 190°C |
| Mould temperature: | 30°C |
| Injection moulding pressure: | 48 bar |
| Back pressure: | 15 bar |
| Injection speed: | 95 mm/s |
| Injection time: | 0.22 s |
| holding pressure: | 80 bar |
| holding time: | 10 sec |
| Cooling time: | 15 sec |
| Cycle time | 36 s |
| Screw speed | 80 rpm (1/min) |

The value of the injection pressure should be sufficient to completely fill the mould in the above mentioned indicated time span.

By a glossmeter the fraction of luminous flow reflected by the examined specimens surface is measured, under an incident angle of 60°. The value reported in table 2 corresponds to the mean gloss value over 10 specimens for each tested polymer

The glossmeter used is a photometer Zehntner model ZGM 1020 or 1022 set with an incident angle of 60°. The measurement principle is given in the Norm ASTM D2457. The apparatus calibration is done with a sample having a known gloss value. Data are reported in table 3.

<u>Scratch resistance</u>

Scratch resistance was measured with Erichson 5 finger scratch testing system, with 10N load on DIN A5 plaques.

The Erichson scratch tester allows the evaluation of scratch resistance at forces between 5N and 20N. In the test a force of 10N was applied (inferior loads did not produce significant scratches) at a speed of 1000 mm/min of the scratch tool. The tool is in contact with the surface through a round shaped tip with a diameter of 1mm. A pattern of 20 lines (10 in one direction and 10 at right angles to those) is generated by the tester and the scratch resistance is determined afterwards by measuring the difference in brightness of the scratched and the unscratched surface. The difference in brightness is measured by a BYK Gardner instrument (or equivalent photometer) and the resulting delta L (dL) value (CieLab system) OMS is in direct correlation with scratch depth. Thus, dL is used as an indicator of the scratch resistance of the compounds.

3 plaques of different grained surface (coarse grain, fine grain, smooth) were prepared for each polymer to be tested. Plaques were injection molded using a Krauss Maffei injection moulding machine model KM 150-700C2 operated under the following conditions:

| | |
|---|---|
| Melt temperature: | 210°C |
| Melt temperature profile: | Zone1 190°C, Zone2 200°C, Zone3 210°C, Zone4 210°C, Zone5 210°C injector 210°C |
| Mould temperature: | 30°C |
| Injection moulding pressure: | 80 bar |
| Back pressure: | 10 bar |
| Injection speed: | 7 mm/s |
| Injection time: | 11 s |
| holding pressure: | 50 bar |
| holding time: | 30 sec |
| Cooling time: | 20 sec |
| Cycle time | 76 s |

The plaques were submitted to the scratch test data are reported in table 3.

Examples

Polymer blend component (A) was produced in a plant operating continuously according to the mixed liquid-gas polymerization technique, carried out under the conditions specified in Table 1. The polymerization was carried out in the presence of a catalyst system in a series of two reactors equipped with devices to transfer the product from one reactor to the one immediately next to it.

Preparation of the solid catalyst component:

The Ziegler-Natta catalyst was prepared according to the Example 5, lines 48-55 of the European Patent EP728769. Triethylaluminium (TEAL) was used as co-catalyst and dicyclopentyldimethoxysilane as external donor, with the weight ratios indicated in Table1.

Catalyst system and prepolymerization treatment

The solid catalyst component described above was contacted at 12° C for 24 minutes with aluminium triethyl (TEAL) and dicyclopentyldimethoxysilane (DCPMS) as outside-electron-donor component. The weight ratio between TEAL and the solid catalyst component was equal to 20 and the weight ratio between TEAL and DCPMS equal to 10.

The catalyst system is then subjected to prepolymerization by maintaining it in suspension in liquid propylene at 20° C for about 5 minutes before introducing it into the first polymerization reactor.

Polymerization example A

The polymerisation run is conducted in continuous in a series of two reactors equipped with devices to transfer the product from one reactor to the one immediately next to it. The first reactor is a liquid phase reactor, and the second reactor is a fluid bed gas phase reactor. Polymer component A1 (matrix) is prepared in the first reactor, while polymer component A2 (rubber) is prepared in the second reactor.

Temperature and pressure are maintained constant throughout the course of the reaction. Hydrogen is used as molecular weight regulator. The gas phase (propylene, ethylene, butene and hydrogen) is continuously analysed via gas-chromatography. Process condition are reported in the table 1.

At the end of the run the powder is discharged and dried under a nitrogen flow.

The data relating to Xylene solubles and comonomer content in the final polymer composition reported in table 2 are obtained from measurements carried out on the so obtained polymers, stabilized when necessary.

Then the polymer particles are introduced in an extruder, wherein they are mixed with a conventional additive package comprising 1800 ppm of a DMDBS clarifier/nucleating agent (Millad 3988) to obtain a nucleated composition.

The polymer particles are extruded under nitrogen atmosphere in a twin screw extruder, at a rotation speed of 250 rpm and a melt temperature of 200-250° C.

The data relating to the other physical-mechanical properties of the final polymer blend composition (A) are also reported in table 2.

Table 1 - process conditions

| Component | | A |
|---|---|---|
| TEAL/Propilene | | 0.17 |
| TEAL/DCPMS | molar ratio | 3 |
| **liquid phase reactor: homopolymer (matrix) A1** | | |
| Polymerisation temperature, | °C | 70 |
| Pressure, | Mpa | 37 |
| Residence time, | min | 105 |
| $H_2$ bulk feed | mol ppm | 3600 |
| MFR (230°C/2.16 Kg) | g/10min | 31 |
| Xylene soluble fraction in (A1) | wt% | 2 |
| Split | wt% | 69 |

(continued)

| Gas phase reactor : ethylene butene copolymer A2 (rubber) | | |
|---|---|---|
| Polymerisation temperature, | °C | 86 |
| Pressure, | bar | 16 |
| Residence time, | min | 50 |
| $H_2/C_2^-$ | mol ratio | 0.22 |
| $C_4^-/(C_4^-+C_2^-)$ | Mol ratio | 0.42 |
| Split | wt% | 31 |
| Butene-1 in the rubber (A2) calculated | wt% | 24 |
| Xylene soluble in (A2) calculated | wt% | 63% |
| Notes: $H_2$ bulk= hydrogen concentration in the liquid monomer; $C_2^-$= ethylene; $C_3^-$= propilene; $C_4^-$ =butene-1. | | |

The polymer composition (A) prepared was mechanically mixed with components (B) in example 1, 4 and 6, and with component (B) and (C) in example 5, 7 and 8 by extrusion under the previously described conditions. A Colorant and a conventional additives package comprising antioxidants, light and heat stabilizers, antiacids and release agents (e.g. Erucamide) was also mixed in the composition in the proportions reported in Table 3. The properties of the so obtained final compositions are also reported in Table 3.

Added components

- Engage 7467: (see description page 3) used as optional component (C);
- Talc HM4 produced by IMI Fabi: pure white talc powder with average particle size (Median diameter D50) of about 10 μm, used as component (B);
- Talc Jetfine 3 CA produced by Rio Tinto Minerals: pure white fine talc powder with average particle size (D50) of about 1μm, (compacted) used as component (B);
- Conventional additives package
- black color : BK MB - Colcolor E30/90 (Degussa)
- white color: Titandioxide - TI-PURE R-104 (coated white blue shade Titandioxide)
- other polymer blends (heterophasic compositions HECO2 and HECO 3) are used instead of component (A) in the comparative examples. Structures and properties of the comparative polymer blends are reported in table 2.

Comparative examples 2c and 3C

Example 1 was repeated blending instead of component (A) according to the invention, a different polymer blend respectively HECO 2 in example 2c, and HECO 3 in example 3c

Reference example Ref. 1

The polymer blend component (A) with the sole addition of a black colorant and the additivation package is reported for reference.

Reference example Ref. 2

The polymer blend component (A) with the sole addition of a white colorant and the additives package is reported for reference.

The properties of the so obtained final compositions are also reported in Table 3.

Table 2

| Polymer blends | | | A | HECO2 | HECO3 |
|---|---|---|---|---|---|
| **Matrix component type and properties** | | | *Homopolymer (A1)* | *Homopolymer* | *Homopolymer* |
| Matrix MFR (230°C/2.16 Kg) | | g/10min | 31 | 28 | 73 |
| XS fraction in the matrix | | wt% | 2.0 | 2.0 | 2.3 |
| **Rubber component type and properties** | | | C2C4 (A2) | C2C3 | C2C3 |
| Rubber Split | | wt% | 31 | 18 | 30 |
| C2 wt% referred to the rubber component | | wt% | 76 | 49 | 50 |
| **Polymer Blend properties** | | | | | |
| Melt index (MFR) (230 °C/2,16 kg) | | g/10min | 16.8 | 15 | 17 |
| Xylene-soluble fraction | | wt% | 20 | 17.0 | 28.0 |
| I.V. of xylene-soluble fraction | | dl/g | 1.4 | 2.6 | 3.1 |
| Ethylene content | | wt% | 24.2 | 9.0 | 14.5 |
| Butene content | | wt% | 76.8 | - | - |
| Properties | | | | | |
| Flexural modulus | | MPa | 1036 | 1133 | 950 |
| Tensile Modulus | | MPa | 1150 | | |
| Izod impact resistance (ISO 180) | at 23° C | $kJ/m^2$ | 22.5 | 7.6 | 17 |
| | at 0° C | $kJ/m^2$ | 6.8 | 5.2 | 10.6 |
| | at -20° C | $kJ/m^2$ | 3.7 | 4.2 | 8.4 |
| D/B transition temperature | | °C | -47.5 | <-50 | - |

Table 3

| Examples (black) | | | 1 | 2c | 3c | Ref. 1 |
|---|---|---|---|---|---|---|
| Composition (A) | | wt% | 72.80 | | | 97.80 |
| Comparative HECO2 | | wt% | | 72.80 | | |
| Comparative HECO3 | | wt% | | | 72.80 | |
| Component (B) Talk IMI Fabi HM 4 | | wt% | 25.00 | 25.00 | 25.00 | |
| Conventional additives package | | wt% | 1.20 | 1.20 | 1.20 | 1.20 |
| Black color | | wt% | 1.00 | 1.00 | 1.00 | 1.00 |
| Sum of components wt% | | | 100 | 100 | 100 | 100 |
| Properties | Method | Unit | | | | |
| Melt index (MFR) (230 °C/2.16 kg) | ISO 1133 | g/10’ | 17.4 | 14.7 | 15 | 20 |
| Density (23 °C) | ISO 1183 | g/cm$^3$ | 1.093 | 1.077 | 1.084 | 0.904 |
| Tensile test at 23 °C | ISO 527-1.2 | | | | | |
| Tensile modulus | | MPa | 1960 | 2610 | 2150 | 1090 |
| Charpy unnotched impact strength | ISO 179/1eU | | | | | |
| | 23 °C | kJ/m$^2$ | 49.6 | 48.8 | 102 | >500 |
| | 0 °C | kJ/m$^2$ | 33.1 | 27.9 | 50.3 | 167 |
| Mould shrinkage after 24 h | | | | | | |
| | (in flow) | % | 0.6 | 0.8 | 0.68 | 0.81 |
| | (cross-flow) | % | 0.84 | 0.96 | 0.85 | 1.01 |
| Total shrinkage after annealing (48 h. 80 °C) | | | | | | |
| | (in flow) | % | 0.7 | 0.96 | 0.8 | 1.06 |
| | (cross-flow) | % | 0.95 | 1.14 | 1 | 1.34 |
| Gloss (1mm) Geometry 60 | ISO 2813 | % | 68.4 | 64.6 | 51.2 | 86.2 |

(continued)

| Examples (black) | | | | | 1 | 2c | 3c | Ref. 1 |
|---|---|---|---|---|---|---|---|---|
| Surface evaluation | | | | | homogeneous surface quality and good gloss | Strong tiger stripes, matt surface, opaque film on surface | Tiger stripes, very matt surface, opaque film on surface | Very high gloss |
| Scratch test (10N) on DIN A5 plaque, grained | | | | | | | | |
| Coarse grain | | | | dL | 1 | 6.4 | 6.5 | 0 |
| Fine grain | | | | dL | 1.4 | 8.2 | 7.7 | -0.1 |
| Smooth | | | | dL | 0.2 | 4.3 | 5.3 | -0.1 |
| | | | | | good scratch resistance | poor scratch resistance | poor scratch resistance | Excellent scratch resistance |
| **Examples (white)** | | | **4** | **5** | **6** | **7** | **8** | **Ref.2** |
| Composition (A) | | wt% | 72.80 | 67.80 | 72.80 | 67.80 | 62.80 | 97.80 |
| Component (C) (Engage 7467) | | wt% | | 5.00 | | 5.00 | 10.00 | |
| Component (B) Talk IMI Fabi HM 4 | | wt% | 25.00 | 25.00 | | | | |
| Component (B) Talk Jetfine 3CA | | wt% | | | 25.00 | 25.00 | 25.00 | |
| Conventional additives package | | wt% | 1.20 | 1.20 | 1.20 | 1.20 | 1.20 | 1.20 |
| White color | | wt% | 1.00 | 1.00 | 1.00 | 1.00 | 1.00 | 1.00 |
| Sum of components wt% | | | 100 | 100 | 100 | 100 | 100 | 100 |
| Properties | Method | Unit | | | | | | |
| Ash (1h/ 625 °C) | ISO 3451/1 | wt % | 26.3 | 25.2 | 24.3 | 26.4 | 26.2 | 0.9 |
| MVR(230°C/ 2.16kg) | ISO 1133 | $cm^3$/ 10min | 24.7 | 20.5 | 24.5 | 22.1 | 19.9 | 28.3 |
| Tensile stress at yield 23 °C | ISO 527-1.2 | MPa | 22.8 | 20.1 | 24.1 | 22 | 20.1 | 24.3 |
| Tensile strain at yield | | % | 6.8 | 8 | 6.4 | 6.8 | 7.7 | 11 |
| Tensile modulus | | MPa | 1960 | 1620 | 2010 | 1870 | 1630 | 1190 |

(continued)

| Properties | Method | Unit | | | | | | |
|---|---|---|---|---|---|---|---|---|
| Charpy unnotched impact strength | IS0179/1eU | | | | | | | |
| | 23 °C | kJ/$m^2$ | 40.9 | 67.4 | 121 | 134 | 41 | >150 |
| | 0 °C | kJ/$m^2$ | 26.6 | 41.2 | 39.9 | 51.5 | 86.5 | 127 |
| Charpy notched impact strength | ISO179/1eA | | | | | | | |
| | 23 °C | kJ/$m^2$ | 3.9 | 6.2 | 6.1 | 15.9 | 27.1 | 4.9 |
| | 0 °C | kJ/$m^2$ | 2.5 | 3.4 | 3 | 3.8 | 4.8 | 2.1 |
| Mould shrinkage after 24 h | | | | | | | | |
| | (in flow) | % | 0.6 | 0.49 | 0.62 | 0.44 | 0.39 | 0.83 |
| | (cross-flow) | % | 0.87 | 0.74 | 0.87 | 0.72 | 0.61 | 1.13 |
| Gloss (1mm) Geometry 60° | ISO 2813 | % | 74 | 80.5 | 80.4 | 81.7 | 81.6 | 87.7 |

## Claims

1. Polymer composition comprising:

A) a polymer blend, comprising:

Al) 65-75% by weight, of a crystalline propylene homopolymer or copolymer containing up to 5% by weight of ethylene and/or one or more C4-C10 α-olefin(s), said homopolymer or copolymer having a value of MFR (230 °C, 2.16 kg) of from 25 to 40 g/10 min, and a content of fraction soluble in xylene at room temperature (around 25 °C) of 2% by weight or less; and
A2) 25-35% by weight, of one or more copolymer(s) of ethylene with one or more C4-C10 α-olefin(s) containing from 15 to 35% by weight, of said C4-C10 α-olefin(s);

said polymer blend (A) having values of MFR of from 15 to 25 g/10 min; a total content of ethylene of 20% by weight or more; a total content of C4-C10 α-olefin(s) of equal to or more than 4.5 % by weight; a ratio of the total content of ethylene to the total content of C4-C10 α-olefin(s) of 2.3 or more, and an intrinsic viscosity value of the fraction soluble in xylene at room temperature from 1.1 to 1.5 dl/g, the amounts of (A1) and (A2) being referred to the total weight of the polymer blend (A), a DSC thermogram profile showing a melting temperature peak (TmA2) of from 80 to 140°C, distinguishable from a DSC melting temperature peak (TmA1) equal to or higher than 140°C;
B) a talc mineral filler;

wherein the amount of component (B) is 22-40% by weight referred to the total weight of the composition.

2. Polymer composition according to claim 1 further comprising:
C) an elastomeric polymer different from (A2), having a hardness (Shore A, ASTM D-2240) value equal to or lower than 80;
wherein the amount of component (C) is 1-15% by weight referred to the total weight of the composition.

3. Polymer composition according to claim 2 comprising:

A) 76 to 60% by weight of a polymer blend, comprising:

A1) 60-80% by weight, of a crystalline propylene homopolymer or copolymer containing up to 5% by weight of ethylene and/or one or more C4-C10 α-olefin(s), said homopolymer or copolymer having a value of MFR (230 °C, 2.16 kg) of equal to or less than 50 g/10 min, and a content of fraction soluble in xylene at room temperature (around 25 °C) of 7% by weight or less; and
A2) 20-40% by weight, of one or more copolymer(s) of ethylene with one or more C4-C10 α-olefin(s) containing from 15 to 35% by weight, of said C4-C10 α-olefin(s);

said polymer blend (A) having values of MFR up to 30 g/10 min; a total content of ethylene of 20% by weight or more; a total content of C4-C10 α-olefin(s) of equal to or more than 4.5 % by weight; a ratio of the total content of ethylene to the total content of C4-C10 α-olefin(s) of 2.3 or more, and an intrinsic viscosity value of the fraction soluble in xylene at room temperature 1.5 dl/g or less, the amounts of (A1) and (A2) being referred to the total weight of the polymer blend (A);
B) 22-30 % by weight of a talc mineral filler; and
C) 2-10 % by weight of an elastomeric polymer different from (A2), having a hardness (Shore A, ASTM D-2240) value equal to or lower than 80.

4. Composition according to claim 2 or 3 wherein component (C) have molecular weight distribution (Mw/Mn measured via GPC) of from 1 to 3.

5. Composition according to claim 2 or 3 wherein component (C) is selected from copolymers of ethylene with a C3-C10 α-olefin containing at least 20 wt% of units derived from said C3-C10 α-olefin.

6. Composition according to claim 5 wherein component (C) is selected from the group consisting of:

(a) elastomeric copolymers of ethylene with 1-octene having from 20 wt% to 45 wt% of 1-octene (13C-NMR

analysis),
(b) elastomeric thermoplastic copolymers of ethylene with 1-butene having from 20 wt% to 40 wt% of 1-butene (13C-NMR analysis).

**7.** Moulded articles comprising the polymer composition according to anyone of the previous claims.

**Patentansprüche**

**1.** Polymerzusammensetzung, umfassend:

A) ein Polymergemisch, umfassend:

A1) 65-75 Gew.% eines kristallinen Propylenhomopolymers oder -copolymers, das bis zu 5 Gew.% von Ethylen und/oder einem oder mehreren $C_4$-$C_{10}$ $\alpha$-Olefin(en) enthält, wobei das Homopolymer oder Copolymer einen Wert der MFR (230 °C, 2,16 kg) von 25 bis 40 g/10 min und einen Gehalt an einer in Xylol bei Raumtemperatur (ungefähr 25 °C) löslichen Fraktion von 2 Gew.% oder weniger aufweist; und
A2) 25-35 Gew.% von einem oder mehreren Copolymer(en) von Ethylen mit einem oder mehreren $C_4$-$C_{10}$-$\alpha$-Olefin(en), das bzw. die 15 bis 35 Gew.% des $C_4$-$C_{10}$-$\alpha$ -Olefins bzw. der $C_4$-$C_{10}$-$\alpha$-Olefine enthält bzw. enthalten;

wobei das Polymergemisch (A) Werte der MFR von 15 bis 25 g/10 min; einen Gesamtgehalt an Ethylen von 20 Gew.% oder mehr; einen Gesamtgehalt an $C_4$-$C_{10}$-$\alpha$-Olefin(en) gleich 4,5 Gew.% oder mehr; ein Verhältnis des Gesamtgehalts an Ethylen zu dem Gesamtgehalt an $C_4$-$C_{10}$-$\alpha$-Olefin(en) von 2,3 oder mehr und einen Grenzviskositätswert der in Xylol bei Raumtemperatur löslichen Fraktion von 1,1 bis 1,5 dl/g aufweist, die Mengen an (A1) und (A2) sich auf das Gesamtgewicht des Polymergemisches (A) beziehen, ein DSC-Thermogrammprofil einen Peak der Schmelztemperatur (TmA2) von 80 bis 140 °C zeigt, der von einem Peak der DSC-Schmelztemperatur (TmA1) gleich oder höher als 140 °C unterscheidbar ist;
B) einen mineralischen Talkumfüllstoff;

wobei die Menge an Komponente (B) 22 bis 40 Gew.% beträgt, bezogen auf das Gesamtgewicht der Zusammensetzung.

**2.** Polymerzusammensetzung nach Anspruch 1, des Weiteren umfassend:
C) ein elastomeres Polymer, das sich von (A2) unterscheidet, mit einem Härtewert (Shore A, ASTM D-2240) gleich 80 oder niedriger;
wobei die Menge an Komponente (C) 1 bis 15 Gew.% beträgt, bezogen auf das Gesamtgewicht der Zusammensetzung.

**3.** Polymerzusammensetzung nach Anspruch 2, umfassend:

A) 76 bis 60 Gew.% eines Polymergemisches, umfassend:

A1) 60-80 Gew.% eines kristallinen Propylenhomopolymers oder -copolymers, das bis zu 5 Gew.% von Ethylen und/oder einem oder mehreren $C_4$-$C_{10}$-$\alpha$-Olefin(en) enthält, wobei das Homopolymer oder Copolymer einen Wert der MFR (230 °C, 2,16 kg) gleich oder kleiner als 50 g/10 min und einen Gehalt einer in Xylol bei Raumtemperatur (etwa 25°C) löslichen Fraktion von 7 Gew.% oder weniger aufweist; und
A2) 20-40 Gew.% von einem oder mehreren Copolymer(en) von Ethylen mit einem oder mehreren $C_4$-$C_{10}$-$\alpha$-Olefin(en), das bzw. die 15 bis 35 Gew.% des $C_4$-$C_{10}$-$\alpha$-Olefins bzw. der $C_4$-$C_{10}$-$\alpha$-Olefine enthält bzw. enthalten;

wobei das Polymergemisch (A) Werte der MFR bis zu 30 g/10 min; einen Gesamtgehalt an Ethylen von 20 Gew.% oder mehr; einen Gesamtgehalt an $C_4$-$C_{10}$-$\alpha$-Olefin(en) gleich 4,5 Gew.% oder mehr; ein Verhältnis des Gesamtgehalts an Ethylen zu dem Gesamtgehalt an $C_4$-$C_{10}$-$\alpha$-Olefin(en) von 2,3 oder mehr und einen Grenzviskositätswert der in Xylol bei Raumtemperatur löslichen Fraktion von 1,5 dl/g oder weniger aufweist, wobei die Mengen an (A1) und (A2) sich auf das Gesamtgewicht des Polymergemisches (A) beziehen;
B) 22-30 Gew.% mineralischen Talkumfüllstoff; und
C) 2 bis 10 Gew.% eines elastomeren Polymers, das sich von (A2) unterscheidet, mit einem Härtewert (Shore

A, ASTM D-2240) gleich 80 oder niedriger.

4. Zusammensetzung nach Anspruch 2 oder 3, wobei Komponente (C) eine Molekulargewichtsverteilung ($M_w/M_n$, gemessen mittels GPC) von 1 bis 3 aufweist.

5. Zusammensetzung nach Anspruch 2 oder 3, wobei Komponente (C) ausgewählt ist aus Copolymeren von Ethylen mit einem $C_3$-$C_{10}$-$\alpha$-Olefin, das mindestens 20 Gew.% von dem $C_3$-$C_{10}$-$\alpha$-Olefin abgeleitete Einheiten enthält.

6. Zusammensetzung nach Anspruch 5, wobei Komponente (C) ausgewählt ist aus der Gruppe bestehend aus:

(a) elastomeren Copolymeren von Ethylen mit 1-Octen mit 20 Gew.% bis 45 Gew.% 1-Octen ($^{13}$C-NMR-Analyse),
(b) elastomeren thermoplastischen Copolymeren von Ethylen mit 1-Buten mit 20 Gew. % bis 40 Gew.% 1-Buten ($^{13}$C-NMR-Analyse).

7. Geformte Artikel, die die Polymerzusammensetzung nach einem der vorhergehenden Ansprüche umfassen.

## Revendications

1. Composition de polymère comprenant :

A) un mélange de polymères, comprenant :

A1) 65 à 75 % en poids d'un homopolymère ou copolymère de propylène cristallin contenant jusqu'à 5 % en poids d'éthylène et/ou d'une ou plusieurs $\alpha$-oléfine(s) en C4 à C10, ledit homopolymère ou copolymère ayant une valeur de MFR (230 °C, 2,16 kg) allant de 25 à 40 g/10 min, et une teneur en fraction soluble dans le xylène à température ambiante (environ 25 °C) de 2 % en poids ou moins ; et
A2) 25 à 35 % en poids d'un ou plusieurs copolymère(s) d'éthylène avec une ou plusieurs $\alpha$-oléfine(s) en C4 à C10 contenant de 15 à 35 % en poids de ladite ou desdites $\alpha$-oléfine(s) en C4 à C10 ;

ledit mélange de polymères (A) ayant des valeurs de MFR allant de 15 à 25 g/10 min ; une teneur totale en éthylène de 20 % en poids ou plus ; une teneur totale en $\alpha$-oléfine(s) en C4 à C10 supérieure ou égale à 4,5 % en poids ; un rapport de la teneur totale en éthylène à la teneur totale en $\alpha$-oléfine(s) en C4 à C10 de 2,3 ou plus, et une valeur de viscosité intrinsèque de la fraction soluble dans le xylène à température ambiante allant de 1,1 à 1,5 dl/g, les quantités de (A1) et (A2) étant rapportées au poids total du mélange de polymères (A), un profil de thermogramme DSC présentant un pic de température de fusion (TmA2) allant de 80 à 140 °C, pouvant être distingué d'un pic de température de fusion DSC (TmA1) supérieur ou égal à 140 °C,
B) une charge minérale de talc ;

la quantité de composant (B) étant de 22 à 40 % en poids par rapport au poids total de la composition.

2. Composition de polymère selon la revendication 1 comprenant en outre :
C) un polymère élastomère différent de (A2), ayant une valeur de dureté (Shore A, ASTM D-2240) inférieure ou égale à 80 ;
la quantité de composant (C) étant de 1 à 15 % en poids par rapport au poids total de la composition.

3. Composition de polymère selon la revendication 2 comprenant :

A) 76 à 60 % en poids d'un mélange de polymères, comprenant :

A1) 60 à 80 % en poids d'un homopolymère ou copolymère de propylène cristallin contenant jusqu'à 5 % en poids d'éthylène et/ou d'une ou plusieurs $\alpha$-oléfine(s) en C4 à C10, ledit homopolymère ou copolymère ayant une valeur de MFR (230 °C, 2,16 kg) inférieure ou égale à 50 g/10 min, et une teneur en fraction soluble dans le xylène à température ambiante (environ 25 °C) de 7 % en poids ou moins ; et
A2) 20 à 40 % en poids d'un ou de plusieurs copolymère(s) d'éthylène avec une ou plusieurs $\alpha$-oléfine(s) en C4 à C10 contenant de 15 à 35 % en poids de ladite ou desdites $\alpha$-oléfine(s) en C4 à C10 ;

ledit mélange de polymères (A) ayant des valeurs de MFR jusqu'à 30 g/10 min ; une teneur totale en éthylène de 20 % en poids ou plus ; une teneur totale en $\alpha$-oléfine(s) en C4 à C10 supérieure ou égale à 4,5 % en poids ; un rapport de la teneur totale en éthylène à la teneur totale en $\alpha$-oléfine(s) en C4 à C10 de 2,3 ou plus, et une valeur de viscosité intrinsèque de la fraction soluble dans le xylène à température ambiante de 1,5 dl/g ou moins, les quantités de (A1) et (A2) étant rapportées au poids total du mélange de polymères (A) ;
B) 22 à 30 % en poids d'une charge minérale de talc ; et
C) 2 à 10 % en poids d'un polymère élastomère différent de (A2), ayant une valeur de dureté (Shore A, ASTM D-2240) égale ou inférieure à 80.

**4.** Composition selon la revendication 2 ou 3 dans laquelle le composant (C) a une distribution des masses moléculaires (Mw/Mn mesurée par CPG) allant de 1 à 3.

**5.** Composition selon la revendication 2 ou 3 dans laquelle le composant (C) est choisi parmi les copolymères d'éthylène avec une $\alpha$-oléfine en C3 à C10 contenant au moins 20 % en poids d'unités dérivées de ladite $\alpha$-oléfine en C3 à C10.

**6.** Composition selon la revendication 5 dans laquelle le composant (C) est choisi dans le groupe constitué par :

(a) des copolymères élastomères d'éthylène avec du 1-octène ayant de 20 % en poids à 45 % en poids de 1-octène (analyse 13C-RMN),
(b) des copolymères thermoplastiques élastomères d'éthylène avec du 1-butène ayant de 20 % en poids à 40 % en poids de 1-butène (analyse 13C-RMN).

**7.** Articles moulés comprenant la composition de polymère selon l'une quelconque des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005014715 A
- WO 2005121240 A
- WO 2008079998 A
- EP 782587 A
- US 4399054 A
- EP 45977 A
- US 4472524 A
- US 4522930 A
- WO 0063261 A
- WO 0157099 A
- EP 361493 A
- EP 728769 A